(19) Europäisches Patentamt / European Patent Office / Office européen des brevets

(11) **EP 4 462 540 A1**

(12) **EUROPEAN PATENT APPLICATION**
published in accordance with Art. 153(4) EPC

(43) Date of publication:
**13.11.2024 Bulletin 2024/46**

(21) Application number: **24747449.7**

(22) Date of filing: **25.01.2024**

(51) International Patent Classification (IPC):
**H01M 10/0562** (2010.01)   **H01M 4/62** (2006.01)
**H01M 10/052** (2010.01)

(52) Cooperative Patent Classification (CPC):
**H01M 10/0562; H01M 10/052; H01M 10/0585;**
**Y02E 60/10**

(86) International application number:
**PCT/KR2024/001156**

(87) International publication number:
**WO 2024/158214 (02.08.2024 Gazette 2024/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.01.2023 KR 20230009548**

(71) Applicants:
• **LG Energy Solution, Ltd.**
  **Seoul 07335 (KR)**
• **The Regents of the University of California**
  **Oakland, CA 94607-5200 (US)**

(72) Inventors:
• **LEE, Jung Pil**
  **Daejeon 34122 (KR)**
• **SONG, Min Sang**
  **Daejeon 34122 (KR)**
• **LEE, Dong Ju**
  **La Jolla, California 92092 (US)**
• **CHEN, Zheng**
  **San Diego, California 92130 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **HIGH-ION-CONDUCTIVITY SOLID ELECTROLYTE MEMBRANE, MANUFACTURING METHOD THEREFOR AND ALL-SOLID-STATE BATTERY COMPRISING SAME**

(57) The present disclosure relates to a solid electrolyte film, its fabrication method, and an all-solid-state battery including the same. More specifically, the solid electrolyte film comprises a slurry including a sulfide and/or halide-based solid electrolyte, a binder, and a solvent, coated on a substrate and then dried and pressed. By pressing at a temperature equal to or above a glass transition temperature (Tg) of the binder, the packing density of the solid electrolyte film is increased, thereby improving the ionic conductivity.

[FIG. 1]

EP 4 462 540 A1

**Description**

[Technical Field]

The present application claims the benefit of and priority to Korean Patent Application No. 10-2023-0009548, filed on January 25, 2023.

The present disclosure relates to a solid electrolyte film with high ionic conductivity, its fabrication method, and an all-solid-state battery including the same.

[Background Technologies]

Various batteries are being researched to overcome the limitations of current lithium secondary batteries in terms of capacity, safety, output, large-scale, and miniaturization.

For example, metal-air batteries with significantly higher theoretical capacity compared to lithium secondary batteries; all-solid-state batteries, which do not have the risk of explosion in terms of safety; supercapacitors in terms of power output; NaS batteries or redox flow batteries (RFBs) in terms of large size, and thin film batteries in terms of miniaturization are being continuously researched in academia and industry.

An all-solid-state battery refers to a battery where the liquid electrolyte used in conventional lithium secondary batteries is replaced with a solid one, eliminating risks of ignition or explosion due to decomposition reactions of traditional electrolytes, thus significantly enhancing safety. Moreover, it has the advantage of drastically improving the energy density of the battery in terms of mass and volume by using Li metal or Li alloy as the negative electrode.

However, the use of solid electrolyte in all-solid-state batteries, while ensuring safety, can lead to reduced ionic conductivity. Furthermore, the use of a liquid electrolyte along with the solid electrolyte to maintain ionic conductivity can cause a reduction in strength.

Generally, to maintain performance and processability of all-solid-state batteries, the ionic conductivity of the solid electrolyte must be kept above a certain level.

Therefore, ongoing research and development are dedicated to improving the ionic conductivity of solid electrolytes. As the demand and application areas for all-solid-state batteries increase, the required level of ionic conductivity for solid electrolytes is also rising. However, there are limitations in the ionic conductivity of commercially available solid electrolytes, limiting the application areas for all-solid-state batteries including solid electrolytes.

Hence, the development of solid electrolytes with a level of ionic conductivity that can be applied to a broader range of fields is necessary.

[Prior Art Reference]

[Patent Document]

(Patent Document 1) Korean Publication No. 2022-0095689

[Detailed Description of the Invention]

[Technical Problem]

The present inventors have conducted extensive research to solve the aforementioned problems and found that by coating a substrate with a slurry including sulfide-based and/or halide-based solid electrolytes, a binder, and a solvent, followed by drying and pressing, and pressing at a temperature equal to or above a glass transition temperature (Tg) of the binder, the packing density of the fabricated solid electrolyte film increases, thereby enhancing its ionic conductivity.

Therefore, the objective of the present disclosure is to provide a solid electrolyte film with improved ionic conductivity and a method for fabricating the same.

Another objective of the present disclosure is to provide an all-solid-state battery including a solid electrolyte film with improved ionic conductivity.

[Technical Solution]

To achieve the aforementioned objectives, the present disclosure provides a solid electrolyte film comprising: a solid electrolyte and a binder, wherein: the solid electrolyte includes at least one selected from the group consisting of sulfide-based solid electrolytes and halide-based solid electrolytes, and wherein the solid electrolyte film has a packing density of 0.81 to 0.99.

The present disclosure also provides the solid electrolyte film, wherein: the sulfide-based solid electrolyte may be represented by Formula 1:

$$<\text{Formula 1}> \qquad L_{a1}M_{b1}P_{c1}S_{d1}A_{e1}$$

wherein in Formula 1, L is an element selected from Li, Na, and K; M is an element selected from B, Zn, Sn, Si, Cu, Ga, Sb, Al, and Ge; A is an element selected from I, Br, Cl, and F; each of a1, b1, c1 d1 and e1 represents a compositional ratio of each element; and a ratio of a1:b1:c1:d1:e1 is 1 to 12 : 0 to 1 : 1 : 2 to 12 : 0 to 5.

The present disclosure further provides the solid electrolyte film, wherein: the halide-based solid electrolyte may be represented by Formula 2:

$$<\text{Formula 2}> \qquad Li_{6-3a}M_aBr_bCl_c$$

wherein in Formula 2, M is a metal other than Li, a is 0<a<2, b is $0 \leq b \leq 6$, c is $0 \leq c \leq 6$, and b+c=6.

The present disclosure further provides the solid electrolyte film, wherein: the solid electrolyte film comprises 95 to 99.5 weight % of the solid electrolyte based on a total weight of the solid electrolyte film.

The present disclosure further provides the solid electrolyte film, wherein: the binder includes at least one selected from a group consisting of Ethylene-vinyl acetate (EVA), Styrene-ethylene-butylene-styrene (SEBS), Styrene butadiene rubber (SBR), Nitrile butadiene rubber (NBR), Hydrogenated nitrile butadiene rubber (HNBR), and their copolymers.

The present disclosure further provides the solid electrolyte film, wherein: the binder is included in an amount of 0.5 to 5 weight % based on a total weight of the solid electrolyte film.

The present disclosure further provides the solid electrolyte film, wherein: the solid electrolyte is either directly bonded, or bonded through the binder, to an adjacent solid electrolyte.

The present disclosure further provides the solid electrolyte film, wherein: an ionic conductivity of the solid electrolyte film is 0.1 to 10 mS/cm.

The present disclosure further provides a method for fabricating a solid electrolyte film, comprising: (S1) mixing a solid electrolyte, a binder, and a solvent to form a slurry; (S2) coating the slurry on a substrate and then drying it; and (S3) pressing a coating layer at a temperature equal to or above a glass transition temperature (Tg) of the binder, wherein the solid electrolyte includes at least one selected from a group consisting of sulfide-based solid electrolytes and halide-based solid electrolytes.

The present disclosure further provides a method for fabricating a solid electrolyte film, wherein: the solvent includes a non-aqueous solvent, and the non-aqueous solvent includes at least one selected from a group consisting of anisol, xylene, toluene, N,N'-dimethylacetamide (DMAc), N-methyl pyrrolidone (NMP), dimethyl sulfoxide (DMSO), and N,N-dimethylformamide (DMF).

The present disclosure further provides a method for fabricating a solid electrolyte film, wherein: the glass transition temperature (Tg) of the binder is 45 to 250°C.

The present disclosure further provides a method for fabricating a solid electrolyte film, wherein: the pressure during the pressing is 300 to 500 MPa.

The present disclosure further provides an all-solid-state battery comprising a positive electrode, a negative electrode, and the aforementioned solid electrolyte film interposed therebetween.

[Advantageous Effects]

According to the present disclosure, in a wet process for fabricating a solid electrolyte film, by coating a substrate with a slurry including a solid electrolyte, a binder, and a solvent, and then drying and pressing it at a temperature equal to or above a glass transition temperature (Tg) of the binder, the packing density of the solid electrolyte film can be increased, and its ionic conductivity can be improved.

[Brief Description of Drawings]

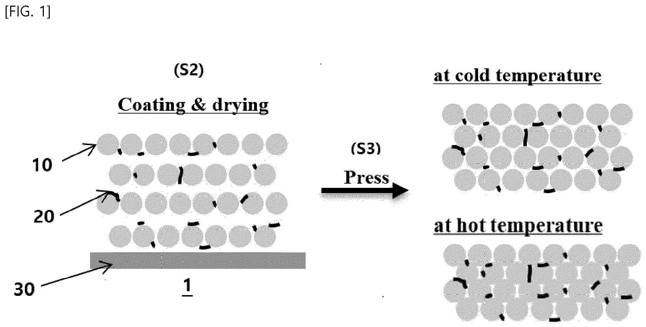

FIG. 1 is a schematic diagram illustrating a fabrication process of a solid electrolyte film according to an Examples of the present disclosure.

[Best Mode for Practicing the Invention]

Hereinafter, the present disclosure is described in more detail to facilitate understanding of the Examples.

The terms and words used in the specification and claims should not be construed in a conventional or dictionary manner and should be interpreted in the meaning and concept that conform to the technical spirit of the present disclosure based on the principle that the inventor can appropriately define the concept of the terms to describe his invention in the best way.

The term "packing density" used in the specification refers to the ratio of the volume of the solid electrolyte film excluding the porosity to the total volume of the film.

**Solid Electrolyte Film**

The present disclosure relates to a solid electrolyte film.

The solid electrolyte film according to the present disclosure includes a solid electrolyte and a binder, wherein the solid electrolyte includes at least one selected from a group consisting of sulfide-based solid electrolytes and halide-based solid electrolytes, and has a packing density between 0.81 and 0.99. Specifically, the packing density may be 0.81 or more, 0.83 or more, or 0.85 or more, and may be 0.97 or less, 0.98 or less, or 0.99 or less.

In an Examples of the present disclosure, the solid electrolyte film is fabricated through a process involving high temperature and high pressure pressing, resulting in the solid electrolyte particles and binders being contained with high packing density. During the pressing process in the fabrication of the solid electrolyte film, the high temperature equal to or above a glass transition temperature (Tg) of the binder increases the fluidity of the binder, and the applied pressure enhances the packing between the solid electrolyte particles or binders, thereby improving the packing density and ionic conductivity of the solid electrolyte film.

In an Examples of the present disclosure, the packing density of the solid electrolyte film may range from 0.81 to 0.99. If the packing density is less than 0.81, the ionic conductivity of the solid electrolyte film may decrease, and if it exceeds 0.99, the fabrication cost of the all-solid-state battery may increase.

In an Examples of the present disclosure, the ionic conductivity of the solid electrolyte film may range from 0.1 to 10 mS/cm. This ionic conductivity may be measured at room temperature (25°C). Specifically, the ionic conductivity can be 0.1 mS/cm or more, 0.3 mS/cm or more, 0.5 mS/cm or more, or 0.7 mS/cm or more, and 10 mS/cm or less, 8 mS/cm or less, 6 mS/cm or less, 4 mS/cm or less, or 2 mS/cm or less.

In an Examples of the present disclosure, the solid electrolyte may include sulfide-based solid electrolyte and/or halide-based solid electrolyte. Also, the solid electrolyte may be included in an amount of 95 to 99.5 weight % based on the total weight of the solid electrolyte film. Specifically, the content of the solid electrolyte can be 95 weight % or more, 96 weight % or more, 97 weight % or more, or 98 weight % or more, and 99.5 weight % or less, 99.3 weight % or less, or 99.1 weight % or less. If the content of the solid electrolyte is less than 95 weight %, the ionic conductivity of the solid electrolyte film may decrease, and if it exceeds 99.5 weight %, the relative decrease in binder content may somewhat reduce the tensile strength.

Additionally, the solid electrolyte can be in particle form, with a particle diameter (D50) ranging from 10 nm to 10 $\mu$m. Specifically, the particle diameter can be 10 nm or more, 100 nm or more, 1 $\mu$m or more, 2 $\mu$m or more, or 3 $\mu$m or more, and 10 $\mu$m or less, 9 $\mu$m or less, 7 $\mu$m or less, or 5 $\mu$m or less. If the particle diameter (D50) of the solid electrolyte is less than 10 nm, tensile strength may decrease, and if it exceeds 10 $\mu$m, the surface of the solid electrolyte film may be uneven, increasing resistance with the electrode.

In an Examples of the present disclosure, the sulfide-based solid electrolyte may be represented by the following Formula 1:

$$\text{<Formula 1>} \qquad L_{a1}M_{b1}P_{c1}S_{d1}A_{e1}$$

In Formula 1, L represents an element selected from Li, Na, and K; M represents an element selected from B, Zn, Sn, Si, Cu, Ga, Sb, Al, and Ge; and A represents I, Br, Cl, or F, with a1 to e1 representing the composition ratio of each element, where a1:b1:c1:d1:e1 ranges from 1-12:0-1:1:2-12:0-5.

For example, the sulfide-based solid electrolyte may include at least one selected from a group consisting of LiPSX (X = Cl, Br, or I), LiGePS, and LiPS. However, the sulfide-based solid electrolyte is not limited thereto, and a wide range of sulfide-based solid electrolytes typically used in the industry can be employed.

In an Examples of the present disclosure, the halide-based solid electrolyte may be represented by the following Formula 2:

$$\text{<Formula 2>} \qquad Li_{6-3a}M_aBr_bCl_c$$

In Formula 2, M represents a metal other than Li; a ranges from $0<a<2$, b ranges from $0\leq b\leq 6$, and c ranges from $0\leq c\leq 6$, with b+c equal to 6.

For example, the halide-based solid electrolyte may include at least one selected from a group consisting of

LiaYBre, $Li_3YCl_6$, and $Li_3YBr_2Cl_4$.

In an Examples of the present disclosure, the binder may increase adhesion between solid electrolyte particles during the fabrication process, as it becomes more mobile at a temperature equal to or above its glass transition temperature (Tg), thus improving the packing density of the solid electrolyte film.

The binder may be at least one selected from a group consisting of Ethylene-vinyl acetate (EVA), Styrene-ethylene-butylene-styrene (SEBS), Styrene butadiene rubber (SBR), Nitrile butadiene rubber (NBR), Hydrogenated nitrile butadiene rubber (HNBR), and their copolymers, but is not limited thereto.

Furthermore, the binder may be included in an amount of 0.5 to 5 weight % based on the total weight of the solid electrolyte film. Specifically, the content of the binder can be 0.5 weight % or more, 0.7 weight % or more, or 0.9 weight % or more, and 5 weight % or less, 4 weight % or less, 3 weight % or less, or 2 weight % or less. If the content of the binder is less than 0.5 weight %, the improvement in packing density of the solid electrolyte film might be minimal, affecting ionic conductivity, and if it exceeds 5 weight %, it might act as a resistance, reducing ionic conductivity.

In an Examples of the present disclosure, the thickness of the solid electrolyte film can range from 50 to 150 $\mu$m. Specifically, the thickness of the solid electrolyte film can be 50 $\mu$m or more, 60 $\mu$m or more, 70 $\mu$m or more, or 80 $\mu$m or more, and 150 $\mu$m or less, 140 $\mu$m or less, 130 $\mu$m or less, or 120 $\mu$m or less. If the thickness of the solid electrolyte film is less than 50 $\mu$m, its strength may be low, reducing processability, and if it exceeds 150 $\mu$m, energy density may decrease.

**Method for Fabricating a Solid Electrolyte Film**

The present disclosure also pertains to a method for fabricating a solid electrolyte film.

FIG. 1 is a schematic diagram illustrating a fabrication process of a solid electrolyte film according to an Examples of the present disclosure.

Referring to FIG. 1, the method for fabricating a solid electrolyte film 1 according to the present disclosure includes:

(S1) mixing a solid electrolyte 10, a binder 20, and a solvent to form a slurry (not shown);
(S2) coating a substrate 30 with the slurry, followed by drying (coating & drying); and
(S3) pressing the coated layer at a temperature equal to or above a glass transition temperature (Tg) of the binder 20 (press).

The solid electrolyte used includes at least one selected from a group consisting of sulfide-based solid electrolytes and halide-based solid electrolytes. The type and amount of the solid electrolyte and binder are as previously described.

When pressing, pressing at a high temperature (at hot temperature) rather than a low temperature (at cold temperature) can result in a higher packing density due to the reduced physical distance between the solid electrolyte 10 and the binder 20 in the fabricated solid electrolyte film 1. The high temperature referred to here can be a temperature equal to or above a glass transition temperature (Tg) of the binder.

Each step of the method for fabricating the solid electrolyte film according to the present disclosure is described in more detail below.

In step (S1) of the method for fabricating a solid electrolyte film according to the present disclosure, a solid electrolyte, a binder, and a solvent are mixed to form a slurry.

The type and amount of the solid electrolyte and binder are previously described.

In an Examples of the present disclosure, the solvent may include a non-protonic solvent. The non-protonic solvent may include at least one selected from a group consisting of Anisol, Xylene, Toluene, N,N'-dimethylacetamide (DMAc), N-methyl pyrrolidone (NMP), dimethyl sulfoxide (DMSO), and N,N-dimethylformamide (DMF).

Also, the amount of the solvent can be appropriately adjusted so that the slurry can be prepared with a concentration suitable for smooth coating operations. For example, the solvent may be mixed in an amount of 50 to 150 parts by weight per 100 parts by weight of the solid electrolyte.

In step (S2) of the method for fabricating a solid electrolyte film according to the present disclosure, the slurry can be coated on a substrate and then dried. The substrate is not particularly limited as long as it can be used as a substrate in the fabrication of an electrolyte film. For example, the substrate may include at least one selected from a group consisting of Polyethylene (PE), Ethylene-vinyl acetate copolymer (EVA), Polypropylene (PP), Polyimide (PI), Polyamide (PA), Polycarbonate (PC), Polyacrylonitrile (PAN), Polytetrafluoroethylene (PTFE), Polyvinylidene fluoride (PVDF), Polyethylene terephthalate (PET), polyvinyldifluoroethylene, polyvinylchloride, polyvinylidene chloride, polyetherketone, Polyether ether ketone (PEEK), and polyethylene ether nitrile.

Moreover, the method of coating is not particularly limited as long as it can form a coating layer using a slurry. For example, the coating can be performed by roll coating, gravure coating, doctor blade coating, slot die coating, slurry coating, or extrusion coating.

Additionally, the drying process is not particularly limited as long as it sufficiently removes the solvent from the coating layer. For example, the drying can be carried out at a temperature between 60 and 130°C. Specifically, the drying temperature can be 60°C or more, 65°C or more, 70°C or more, or 75°C or more, and 130°C or less, 120°C or less, 110°C or less, 100°C or less, 90°C or less, or 85°C or less. A vacuum drying process can also be added. The solvent can be completely removed by the drying process.

In step (S3) of the method for fabricating a solid electrolyte film according to the present disclosure, the coating layer can be pressed at a temperature equal to or above a glass transition temperature (Tg) of the binder.

In an Examples of the present disclosure, the glass transition temperature (Tg) of the binder can be between 45 and 250°C, specifically 45°C or more, 60°C or more, 80°C or more, or 100°C or more, and 250°C or less, 220°C or less, 200°C or less, 180°C or less, or 160°C or less. If the glass transition temperature (Tg) is below 45°C, the mobility of the binder may not improve, leading to no enhancement in packing density, and consequently, it may be difficult to expect an improvement in ionic conductivity. If it exceeds 250°C, the processability of fabricating the solid electrolyte film may decrease.

In an Examples of the present disclosure, the pressure applied during pressing can be between 300 and 500 MPa, specifically 300 MPa or more, 320 MPa or more, 340 MPa or more, or 360 MPa or more, and 500 MPa or less, 480 MPa or less, 460 MPa or less, 440 MPa or less, 420 MPa or less, or 400 MPa or less. If the pressure is less than 300 MPa, the ionic conductivity and strength of the solid electrolyte film may be low, reducing processability, and if it exceeds 500 MPa, applying high pressure may be difficult due to the limitations of the fabrication equipment.

**All-Solid-State Battery**

The present disclosure also relates to an all-solid-state battery that includes the solid electrolyte film.

The all-solid-state battery according to the present disclosure comprises the solid electrolyte film; a positive electrode formed on a surface of the solid electrolyte film; and a negative electrode formed on another surface of the solid electrolyte film.

In an Examples of the present disclosure, the positive electrode may include a positive-electrode active material, a conductive material, and a binder.

In the all-solid-state battery of the present disclosure, the positive electrode included in the battery comprises a positive-electrode active material layer, which can be formed on a surface of the positive electrode collector.

The positive-electrode active material layer comprises a positive-electrode active material, a conductive material, and a binder.

Additionally, the positive-electrode active material is not particularly limited as long as it can reversibly absorb and release lithium ions, and may include, for example, layered compounds or compounds substituted with one or more transition metals such as lithium cobalt oxide ($LiCoO_2$), lithium nickel oxide ($LiNiO_2$), $Li[Ni_xCo_yMn_zM_v]O_2$ (where M is selected from a group consisting of Al, Ga, and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (where $0 \leq a \leq 0.2$, $0.6 \leq b \leq 1$, $0 \leq b' \leq 0.2$, $0 \leq c \leq 0.2$; M includes at least one selected from Mn, Ni, Co, Fe, Cr, V, Cu, Zn and Ti; M' includes at least one selected from Al, Mg, and B; A includes at least one selected from P, F, S, and N); lithium manganese oxides such as $Li_{1+y}Mn_{2-y}O_4$ (where y ranges from 0 to 0.33), $LiMnO_3$, $LiMn_2O_3$, and $LiMnO_2$; lithium copper oxide ($Li_2CuO_2$); vanadium oxides such as $LiVaOs$, $LiFe_3O_4$, $V_2O_5$ and $Cu_2V_2O_7$; Ni site-type lithium nickel oxides represented by Formula $LiNi_{1-y}M_yO_2$ (where M=Co, Mn, Al, Cu, Fe, Mg, B or Ga, and y ranges from 0.01 to 0.3); lithium manganese composite oxides represented by Formula $LiMn_{2-y}M_yO_2$ (where M is Co, Ni, Fe, Cr, Zn or Ta, and y ranges from 0.01 to 0.1) or $Li_2Mn_3MO_8$ (where M is Fe, Co, Ni, Cu or Zn), lithium manganese oxide with $LiMn_2O_4$ a part of Li substituted by alkali earth metal ions; disulfide compounds; and $Fe_2(MoO_4)_3$, among others, but are not limited thereto.

Furthermore, the positive-electrode active material may be included in an amount of 60 to 80 weight % based on the total weight of the positive-electrode active material layer. Specifically, the content of the positive-electrode active material can be 60 weight % or more, 65 weight % or more, or 68 weight % or more, and 80 weight %, 75 weight % or less, or 72 weight % or less. If the content of the positive-electrode active material is less than 60 weight %, the performance of the battery may decrease, and if it exceeds 80 weight %, the transfer resistance of the material may increase.

Additionally, the conductive material is not particularly limited as long as it can prevent side reactions in the internal environment of the all-solid-state battery and does not induce chemical changes in the battery while providing excellent electrical conductivity. Typically, graphite or conductive carbon can be used. Also, for example, carbons such as natural graphite and artificial graphite, etc.; carbon blacks such as carbon black, acetylene black, Ketjen black, Denka black, thermal black, channel black, furnace black, lamp black and summer black, etc.; carbonaceous materials with a crystalline structure of graphene or graphite; conductive fibers such as carbon fiber and metal fiber, etc.; fluorinated carbon; metal powders such as aluminum powders and nickel powders, etc.; conductive whiskers such as zinc oxide and potassium titanate, etc.; conductive oxides such as titanium oxide, etc.; and conductive polymers such as polyphenylene derivatives, etc., can be used alone or in combination, but are not limited thereto. Preferably, the conductive material may include vapor-grown carbon fiber (VGCF).

The conductive material can typically be included in an amount of 1 to 5 weight % based on the total weight of the positive-electrode active material layer, specifically 1 weight % or more, 1.5 weight % or more, or 2 weight % or more, and 5 weight % or less, 4.5 weight % or less, or 4 weight % or less. If the content of the conductive material is less than 1 weight %, it may be difficult to expect an improvement in electrical conductivity or the electrochemical properties of the battery may decrease, and if it exceeds 5 weight %, the amount of positive-electrode active material may relatively decrease, reducing the capacity and energy density of the battery. The method of including the conductive material in the positive electrode is not particularly limited and can be done using typical methods known in the field, such as mixing and coating with the positive-electrode active material.

Also, the binder assists in binding the positive-electrode active material and the conductive material, as well as binding to the collector. The binder may include at least one selected from a group consisting of styrene-butadiene rubber, acrylic styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenol resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-co-hexafluoropropene. Preferably, the binder may include polytetrafluoroethylene (PTFE).

Additionally, the binder may be included in an amount of 0.5 to 4 weight % based on the total weight of the positive-electrode active material layer, specifically 0.5 weight % or more, 1 weight % or more, or 1.5 weight % or more, and 4 weight % or less, 3.5 weight % or less, or 3 weight % or less. If the content of the binder is less than 0.5 weight %, the adhesion between the positive-electrode active material and the positive electrode collector may decrease, and if it exceeds 4 weight %, although adhesion may improve, the amount of positive-electrode active material may decrease, leading to lower battery capacity.

Furthermore, the positive electrode collector supports the positive-electrode active material layer and transfers electrons between the external wiring and the positive-electrode active material layer.

The positive electrode collector is not particularly limited as long as it does not induce chemical changes in the all-solid-state battery and has high electron conductivity. For example, copper, stainless steel, aluminum, nickel, titanium, palladium, graphitized carbon, copper or stainless steel surface treated with carbon, nickel, silver and aluminum-cadmium alloy, etc., can be used as the positive electrode collector.

The positive electrode collector may have fine undulated structures on its surface or adopt a three-dimensional porous structure to strengthen the binding with the positive-electrode active material layer. Thus, the positive electrode collector may include various forms such as film, sheet, foil, mesh, net, porous body, foam and nonwoven fabric, etc.

The above-mentioned positive electrode can be fabricated using typical methods. Specifically, a composition for forming the positive-electrode active material layer can be prepared by mixing the positive-electrode active material, the conductive material, and the binder in an organic solvent, which is then applied and dried on the positive electrode collector and optionally pressed to improve electrode density. The organic solvent used should be capable of uniformly dispersing the positive-electrode active material, the binder, and the conductive material and easily evaporate. Specifically, acetonitrile, methanol, ethanol, tetrahydrofuran, water and isopropyl alcohol, etc., can be used.

In the present disclosure, the negative electrode included in the all-solid-state battery comprises a negative-electrode active material layer, which can be formed on a surface of the negative electrode collector. The negative-electrode active material can be a material capable of reversibly intercalating or deintercalating lithium (Li+), a material that reacts with lithium ions to reversibly form lithium-containing compounds, and may include lithium metal or lithium alloys.

The material capable of reversibly intercalating or deintercalating lithium ions may include, for example, crystalline carbon, amorphous carbon, or a mixture thereof. The material capable of reacting with lithium ions to reversibly form lithium-containing compounds may include, for example, tin oxide, titanium nitride, or silicon. The lithium alloy may include, for example, an alloy of lithium (Li) and one or more metals selected from a group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative-electrode active material may be lithium metal or a lithium-indium alloy (Li-In), specifically in the form of lithium metal or a thin film or powder form of lithium-indium alloy.

The negative-electrode active material may be included in an amount of 40 to 80 weight % based on the total weight of the negative-electrode active material layer. Specifically, the content of the negative-electrode active material can be 40 weight % or more, or 50 weight % or more, and 80 weight % or less or 70 weight % or less. If the content of the negative-electrode active material is less than 40 weight %, the connectivity between the wet and dry negative-electrode active material layers may be insufficient, and if it exceeds 80 weight %, transfer resistance of the material may increase.

Additionally, the binder in the negative-electrode active material layer is as described for the positive-electrode active material layer.

Also, the conductive material is as described for the positive-electrode active material layer.

Furthermore, the negative electrode collector is not particularly limited as long as it is conductive and does not induce chemical changes in the battery. For example, the negative electrode collector may be copper, stainless steel, aluminum, nickel, titanium, graphitized carbon, copper or stainless steel surface treated with carbon, nickel, titanium, silver and aluminum-cadmium alloy, etc., such as the positive electrode collector, the negative electrode collector can also have various forms such as film, sheet, foil, net, porous body, foam and nonwoven fabric, etc., with fine undulated structures on its surface.

The method of manufacturing the negative electrode is not particularly limited and can be done using conventional layer or film formation methods used in the industry on the negative electrode collector. For example, methods such as pressing, coating, and deposition can be utilized. Additionally, assembling the battery with the negative electrode collector without a lithium thin film and then forming a metal lithium thin film on the metal plate during initial charging is also included in the scope of the negative electrode of the present disclosure.

**Method for Fabricating an All-Solid-State Battery**

The present disclosure also relates to a method for fabricating an all-solid-state battery. The method for fabricating an all-solid-state battery according to the present disclosure includes:

(P1) placing a mixture for forming a positive-electrode active material layer on a surface of the solid electrolyte film and pressing it to form a positive electrode on that surface of the solid electrolyte film; and
(P2) placing a negative electrode on the other surface of the solid electrolyte film and pressing it.

In step (P1) above, a mixture for forming a positive-electrode active material layer is placed on a surface of the solid electrolyte film and then hot pressed to form a positive electrode on that surface of the solid electrolyte film.

The mixture for forming a positive-electrode active material layer may include a positive-electrode active material, a conductive material, and a binder, as previously described. Additionally, after forming the positive-electrode active material layer, a collector can be attached to manufacture the positive electrode.

Furthermore, the pressing process is carried out to bond the solid electrolyte film and the positive electrode while reducing interface resistance, and can be performed at a pressure of 300 MPa to 500 MPa. The pressure during the hot pressing process can be 300 MPa or more, 350 MPa or more, or 400 MPa or more, and 500 MPa or less, 470 MPa or less, or 450 MPa or less. If the temperature and/or pressure of the hot pressing process is below these ranges, the solid electrolyte film and the positive electrode may not be integrated properly, and if it exceeds these ranges, the solid electrolyte film or the positive electrode may deform or damage.

In step (P2) above, a negative electrode is placed on the other surface of the solid electrolyte film and pressed to fabricate the all-solid-state battery. The negative electrode is as previously described.

The pressure during the pressing can be 40 MPa to 80 MPa, specifically 40 MPa or more, 45 MPa or more, or 50 MPa or more, and 80 MPa or less, 75 MPa or less, or 70 MPa or less. If the pressure is less than 40 MPa, the interface resistance between the negative electrode and the solid electrolyte film may increase, and if it exceeds 80 MPa, the solid electrolyte film or the negative electrode may deform or damage.

The all-solid-state battery fabricated in this way includes a thin solid electrolyte film, which can reduce the manufacturing cost while improving ion conductance and energy density. Additionally, the solid electrolyte and the positive electrode are integrated by the hot pressing process, which can enhance interface stability.

**Battery Module**

The present disclosure also relates to a battery module including the all-solid-state battery as a unit battery, a battery pack including the battery module, and a device including the battery pack as a power source.

Specific examples of such devices include power tools powered by battery motors; electric vehicles such as electric vehicles (EVs), hybrid electric vehicles (HEVs), plug-in hybrid electric vehicles (PHEVs); electric bicycles such as electric bicycles (E-bikes), electric scooters (E-scooters); electric golf carts; power storage systems, etc., but are not limited thereto.

[Mode for Practicing the Invention]

Hereinafter, preferred Examples are presented to aid the understanding of the present disclosure. These Examples are illustrative of the invention and are not intended to limit the scope and technical spirit of the invention. It is apparent to those skilled in the art that various changes and modifications can be made within the scope and spirit of the invention as set forth in the appended claims. Such changes and modifications are also considered to be within the scope of the patent claims attached.

In the following Examples and Comparative Examples, solid electrolyte films and all-solid-state batteries were fabricated according to the compositions and processes described in Table 1 below.

[Table 1]

| | Solid electrolyte film | | | | Manufacturing Process | |
|---|---|---|---|---|---|---|
| | sulfide-based solid electrolyte | Binder | | | Pressing condition | |
| | | Material | Content (Weight %) | | Temperature (°C) | Pressure (MPa) |
| Example 1 | LiPSCI | SEBS | 1 | | 150 | 370 |
| Example 2 | LiPSCI | SEBS | 2 | | 150 | 370 |
| Example 3 | LiPSCI | SEBS | 3 | | 150 | 370 |
| Example 4 | LiPSCI | EVA | 1 | | 150 | 370 |
| Example 5 | LiPSCI | EVA | 2 | | 150 | 370 |
| Example 6 | LiPSCI | EVA | 3 | | 150 | 370 |
| Example 7 | LiPSCI | SEBS | 1 | | 25 | 370 |
| Example 8 | LiPSCI | SEBS | 2 | | 25 | 370 |
| Example 9 | LiPSCI | EVA | 1 | | 25 | 370 |
| Example 10 | LiPSCI | SEBS | 1 | | 25 | 500 |

## Example 1

99 weight % of sulfide-based solid electrolyte LiPSCI and 1 weight % of binder SEBS (Styrene-ethylene-butylene-styrene) were mixed, followed by addition to the solvent xylene to prepare a slurry. The concentration of the slurry was adjusted so that the weight of the solvent was 67 parts per 100 parts of the sulfide-based solid electrolyte.

The slurry was then coated on a PET (polyethylene terephthalate) release film using a doctor blade and dried at a temperature of 80°C.

Afterward, the coating layer was pressed at a temperature of 150°C and a pressure of 370 MPs to fabricate a solid electrolyte film.

## Example 2

A solid electrolyte film was fabricated using the same method as in Example 1, except that the weight of the SEBS binder was adjusted to 2 weight %.

## Example 3

A solid electrolyte film was fabricated using the same method as in Example 1, except that the weight of the SEBS binder was adjusted to 3 weight %.

## Example 4

A solid electrolyte film was fabricated using the same method as in Example 1, except that EVA (Ethylene-vinyl acetate) was used as the binder instead of SEBS at 1 weight %.

**Example 5**

A solid electrolyte film was fabricated using the same method as in Example 4, except that the weight of the EVA binder was adjusted to 2 weight %.

**Example 6**

A solid electrolyte film was fabricated using the same method as in Example 4, except that the weight of the EVA binder was adjusted to 3 weight %.

**Example 7**

A solid electrolyte film was fabricated using the same method as in Example 1, except that the pressing temperature was set to room temperature (25°C).

**Example 8**

A solid electrolyte film was fabricated using the same method as in Example 2, except that the pressing temperature was set to room temperature (25°C).

**Example 9**

A solid electrolyte film was fabricated using the same method as in Example 4, except that the pressing temperature was set to room temperature (25°C).

**Example 10**

A solid electrolyte film was fabricated using the same method as in Example 1, except that the pressing temperature and pressure were set to room temperature (25°C) and 500 MPa, respectively.

**Experimental Example 1: Measurement of Packing Density and Ionic Conductivity of Solid Electrolyte Film**

The packing density and ionic conductivity of the solid electrolyte film were measured using the following method:

(1) Packing Density

The packing density of the solid electrolyte film was calculated using the equation below:

[Equation 1]

$$\rho_{packing} = \rho_{film}\left(\frac{f_{SE}}{\rho_{SE}} + \frac{f_{Binder}}{\rho_{Binder}}\right)$$

In the above Equation 1, $\rho_{packing}$ represents the packing density of the solid electrolyte film, $\rho_{film}$ is the density of the solid electrolyte film, $f_{SE}$ is the weight of the solid electrolyte (SE) contained in the solid electrolyte film, $\rho_{SE}$ is the density of the solid electrolyte (SE) contained in the solid electrolyte film, which is an inherent property of the solid electrolyte material itself, $f_{Binder}$ is the weight of the binder contained in the solid electrolyte film, and $\rho_{Binder}$ is the density of the binder contained in the solid electrolyte film, which is an inherent property of the binder material itself.
The $\rho_{film}$ is calculated by the following Equation 2:

[Equation 2]

$$\rho_{film} = \frac{m}{d \cdot A}$$

In Equation 2, $\rho_{film}$ is the density of the solid electrolyte film, m is the weight of the solid electrolyte film, d is the thickness of the solid electrolyte film (in micrometers, $\mu$m), and A is the area of the solid electrolyte film (in square centimeters, $cm^2$).

(2) Ionic Conductivity

To measure the ionic conductivity of the solid electrolyte film, the solid electrolyte film was placed in a 10 mm diameter polyether ether ketone (PEEK) holder, and a titanium rod was used as a blocking electrode to measure the ionic conductivity.

An electrochemical impedance spectrometer (EIS, VM3, Bio Logic Science Instrument) was used to measure the resistance under conditions of 25°C, amplitude 10 mV, and scan range from 1Hz to 0.1 MHz.

The ionic conductivity of the solid electrolyte film was then calculated using the following Equation 3:

[Equation 3]

$$\sigma_i = \frac{L}{RA}$$

In Equation 3, $\sigma_i$ represents the ionic conductivity (in milli-siemens per centimeter, mS/cm) of the solid electrolyte film, R is the resistance (in ohms, $\Omega$) of the solid electrolyte film measured using the electrochemical impedance spectrometer, L is the thickness (in micrometers, $\mu$m) of the solid electrolyte film, and A is the area (in square centimeters, $cm^2$) of the solid electrolyte film.

Table 2 below shows the results of the packing density and ionic conductivity measured using the aforementioned methods.

[Table 2]

|  | Packing density | ionic conductivity (mS/cm) |
|---|---|---|
| Example 1 | 0.95 | 1.179 |
| Example 2 | 0.96 | 1.089 |
| Example 3 | 0.96 | 0.963 |
| Example 4 | 0.94 | 0.916 |
| Example 5 | 0.95 | 0.72 |
| Example 6 | 0.96 | 0.596 |
| Example 7 | 0.83 | 0.959 |
| Example 8 | 0.85 | 0.916 |
| Example 9 | 0.83 | 0.599 |
| Example 10 | 0.85 | 0.988 |

Referring to Table 2, it was observed that the content of the binder and ionic conductivity are inversely proportional, and the pressing temperature and ionic conductivity are directly proportional. Particularly, it was noted that the ionic conductivity is lower in the sample made under higher pressure at room temperature (Example 10) compared to the one made at high temperature (Example 1), indicating that applying pressure at high temperature is crucial for improving the ionic conductivity of the solid electrolyte film.

Furthermore, under identical fabrication conditions, it was found that solid electrolyte films using SEBS binder exhibit higher ionic conductivity compared to those using EVA binder (Examples 1 and 4, Examples 2 and 5, or Examples 3 and 6).

On the other hand, the increase rate of ionic conductivity depending on the pressing temperature conditions is higher when using EVA binder (Examples 4 and 9) than with SEBS binder (Examples 1 and 7, or Examples 2 and 8).

Although the present disclosure has been described with reference to limited Examples and drawings, it should not be construed as being limited thereto. The present disclosure can undergo various modifications and variations within the technical spirit of the present disclosure and the equivalent scope of the claims listed below by those skilled in the technical field to which the present disclosure pertains.

[Description of Reference Numerals]

[0125]

　1: Solid electrolyte film
　10: Sulfide-based solid electrolyte
　20: Binder
　30: Substrate

**Claims**

1. A solid electrolyte film comprising:

   a solid electrolyte and
   a binder, wherein:

   wherein the solid electrolyte includes at least one selected from the group consisting of a sulfide-based solid electrolyte and a halide-based solid electrolyte, and
   wherein the solid electrolyte film has a packing density of 0.81 to 0.99.

2. The solid electrolyte film according to claim 1, wherein:

   the sulfide-based solid electrolyte is represented by Formula 1:

   $$\text{<Formula 1>} \qquad L_{a1}M_{b1}P_{c1}S_{d1}A_{e1}$$

   wherein in Formula 1, L is an element selected from Li, Na, and K; M is an element selected from B, Zn, Sn, Si, Cu, Ga, Sb, Al, and Ge; A represents I, Br, Cl, or F; a1 to e1 represent a compositional ratio of each element; and a1:b1:c1:d1:e1 is 1~12:0~1:1:2-12:0-5.

3. The solid electrolyte film according to claim 1, wherein:

   the halide-based solid electrolyte is represented by Formula 2:

   $$\text{<Formula 2>} \qquad Li_{6-3a}M_aBr_bCl_c$$

   wherein in Formula 2, M is a metal other than Li, a is $0<a<2$, b is $0\leq b\leq 6$, c is $0\leq c\leq 6$, and b+c=6.

4. The solid electrolyte film according to claim 1, wherein:
   the solid electrolyte film comprises 95 to 99.5 weight % of the solid electrolyte based on a total weight of the solid electrolyte film.

5. The solid electrolyte film according to claim 1, wherein:
   the binder includes at least one selected from a group consisting of Ethylene-vinyl acetate (EVA), Styrene-ethylene-butylene-styrene (SEBS), Styrene butadiene rubber (SBR), Nitrile butadiene rubber (NBR), Hydrogenated nitrile butadiene rubber (HNBR), and their copolymers.

6.  The solid electrolyte film according to claim 1, wherein:
    the binder is included in an amount of 0.5 to 5 weight % based on a total weight of the solid electrolyte film.

7.  The solid electrolyte film according to claim 1, wherein:
    the solid electrolyte is either directly bonded, or bonded through the binder, to an adjacent solid electrolyte.

8.  The solid electrolyte film according to claim 1, wherein:
    an ionic conductivity of the solid electrolyte film is 0.1 to 10 mS/cm.

9.  A method for fabricating a solid electrolyte film, comprising:

    (S1) mixing a solid electrolyte, a binder, and a solvent to form a slurry;
    (S2) coating the slurry on a substrate and then drying it; and
    (S3) pressing a coating layer at a temperature equal to or above a glass transition temperature (Tg) of the binder,
    wherein the solid electrolyte includes at least one selected from a group consisting of sulfide-based solid electrolytes and halide-based solid electrolytes.

10. The method for fabricating a solid electrolyte film according to claim 9, wherein:

    the solvent includes a non-aqueous solvent, and
    the non-aqueous solvent includes at least one selected from a group consisting of N,N'-dimethylacetamide (DMAc), N-methyl pyrrolidone (NMP), dimethyl sulfoxide (DMSO), and N,N-dimethylformamide (DMF).

11. The method for fabricating a solid electrolyte film according to claim 9, wherein:
    the glass transition temperature (Tg) of the binder is 45 to 250°C.

12. The method for fabricating a solid electrolyte film according to claim 9, wherein:
    the pressure during the pressing is 300 to 500 MPa.

13. An all-solid-state battery comprising a positive electrode, a negative electrode, and the solid electrolyte film according to claim 1 interposed therebetween.

[FIG. 1]

## INTERNATIONAL SEARCH REPORT

| International application No. |
|---|
| **PCT/KR2024/001156** |

**A. CLASSIFICATION OF SUBJECT MATTER**

**H01M 10/0562**(2010.01)i; **H01M 4/62**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0562(2010.01); H01B 1/06(2006.01); H01M 10/052(2010.01); H01M 10/058(2010.01); H01M 10/0585(2010.01); H01M 4/133(2010.01); H01M 4/134(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체전해질 (solid state electrolyte), 바인더 (binder), 패킹밀도 (packing density), 황화물계 (sulfide), 할라이드 (halide), 유리전이온도 (glass temperature)

**C. DOCUMENTS CONSIDERED TO BE RELEVANT**

| Category* | Citation of document, with indication, where appropriate, of the relevant passages | Relevant to claim No. |
|---|---|---|
| Y | US 2018-0351159 A1 (SAMSUNG ELECTRONICS CO., LTD.) 06 December 2018 (2018-12-06)<br>See abstract; paragraphs [0054], [0079]-[0082], [0123]-[0124] and [0127]; and figure 1. | 1-13 |
| Y | US 2021-0296704 A1 (PANASONIC INTELLECTUAL PROPERTY MANAGEMENT CO., LTD.) 23 September 2021 (2021-09-23)<br>See abstract; and paragraphs [0074] and [0087]. | 1-13 |
| A | JP 2010-250982 A (IDEMITSU KOSAN CO., LTD.) 04 November 2010 (2010-11-04)<br>See entire document. | 1-13 |
| A | KR 10-2015-0018559 A (TOYOTA JIDOSHA KABUSHIKI KAISHA) 23 February 2015 (2015-02-23)<br>See entire document. | 1-13 |
| A | KR 10-2022-0115754 A (SAMSUNG SDI CO., LTD.) 18 August 2022 (2022-08-18)<br>See entire document. | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 April 2024** | **01 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2">INTERNATIONAL SEARCH REPORT<br>Information on patent family members</td><td colspan="2">International application No.<br><br>**PCT/KR2024/001156**</td></tr>
</table>

| Patent document cited in search report | Publication date (day/month/year) | Patent family member(s) | Publication date (day/month/year) |
|---|---|---|---|
| US 2018-0351159 A1 | 06 December 2018 | JP 2018-206469 A | 27 December 2018 |
| | | JP 2022-060596 A | 14 April 2022 |
| | | JP 7075726 B2 | 26 May 2022 |
| | | JP 7337984 B2 | 04 September 2023 |
| | | KR 10-2018-0131448 A | 10 December 2018 |
| | | KR 10-2566410 B1 | 14 August 2023 |
| | | US 10886515 B2 | 05 January 2021 |
| | | US 11799171 B2 | 24 October 2023 |
| | | US 2021-0083252 A1 | 18 March 2021 |
| US 2021-0296704 A1 | 23 September 2021 | CN 113196545 A | 30 July 2021 |
| | | WO 2020-137388 A1 | 02 July 2020 |
| JP 2010-250982 A | 04 November 2010 | JP 5433285 B2 | 05 March 2014 |
| KR 10-2015-0018559 A | 23 February 2015 | CN 104412440 A | 11 March 2015 |
| | | CN 104412440 B | 19 October 2016 |
| | | JP 5930035 B2 | 08 June 2016 |
| | | US 2015-0147659 A1 | 28 May 2015 |
| | | US 9843071 B2 | 12 December 2017 |
| | | WO 2014-010043 A1 | 16 January 2014 |
| KR 10-2022-0115754 A | 18 August 2022 | US 2023-0411593 A1 | 21 December 2023 |
| | | WO 2022-173099 A1 | 18 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230009548

- KR 20220095689